(19) Europäisches Patentamt
European Patent Office
Office européen des brevets

(11) **EP 1 526 033 B1**

(12) **FASCICULE DE BREVET EUROPEEN**

(45) Date de publication et mention
de la délivrance du brevet:
**24.01.2007 Bulletin 2007/04**

(51) Int Cl.:
***B60N 2/02*** *(2006.01)* ***B64D 11/06*** *(2006.01)*

(21) Numéro de dépôt: **04292399.5**

(22) Date de dépôt: **08.10.2004**

(54) **Procédé de gestion du fonctionnement d'un siège et siège mettant en oeuvre ce procédé**

Verfahren zur Handhabung der Betriebsarten eines Sitzes und diesen Verfahren anwendenten Sitz

Process for managing the operation of a seat and seat making use of this process

(84) Etats contractants désignés:
**DE ES FR GB IT**

(30) Priorité: **24.10.2003 FR 0312496**

(43) Date de publication de la demande:
**27.04.2005 Bulletin 2005/17**

(73) Titulaire: **Precilec**
**89000 Auxerre (FR)**

(72) Inventeur: **Robert, Jean-Claude**
**93340 Le Raincy (FR)**

(74) Mandataire: **Blot, Philippe Robert Emile et al**
**Cabinet Lavoix**
**2, place d'Estienne d'Orves**
**75441 Paris Cedex 09 (FR)**

(56) Documents cités:
**FR-A- 2 740 744      FR-A- 2 806 674**
**FR-A- 2 816 184      US-A1- 2002 113 478**

## Description

La présente invention concerne un procédé de gestion du fonctionnement d'un siège équipé d'un actionneur comportant des moyens de suivi d'au moins une variable caractéristique de l'effort produit par l'actionneur, des moyens de mesure de la position de l'actionneur et des moyens de commande de l'actionneur, le procédé comportant des étapes consistant en :

- une mesure de la ou chaque variable caractéristique ;
- une évaluation de la ou chaque variable caractéristique à partir d'un critère d'évaluation prédéterminé ; et
- la mise en oeuvre d'une mesure appropriée sur le siège en fonction du résultat de ladite évaluation lors de la commande de l'actionneur, voir FR-A- 2 806 674.

Dans les véhicules de transport de passagers, tel que les avions et les trains, il est connu de prévoir des sièges équipés d'actionneurs électriques. Chaque siège comporte généralement un repose-jambes et un dossier déplaçables par rapport à une assise. Ceux-ci sont articulés chacun à une extrémité de l'assise et sont chacun associés à un actionneur électrique permettant leur déplacement. Le siège lui-même est parfois déplaçable globalement par rapport au sol sous la commande d'un actionneur.

Afin d'éviter que le repose-jambes ou le dossier en mouvement ne blesse un passager, ou encore qu'il ne détériore un bagage entreposé sur la course de déplacement de l'élément mobile, il est connu, de mesurer en continu l'intensité du courant consommé par chaque actionneur. Si l'intensité du courant consommé dépasse une valeur de seuil prédéterminée, l'actionneur est immédiatement arrêté.

En effet, lorsque l'élément de siège commandé par l'actionneur rencontre un obstacle, cet élément se trouve immobilisé ou freiné. Le moteur électrique de l'actionneur le commandant est alors bloqué, de sorte que l'intensité du courant consommé par ce moteur s'accroît de manière très importante. L'arrêt de l'actionneur, lorsqu'un courant de forte intensité est détecté dans le moteur, évite que le siège ou l'obstacle qu'il rencontre ne soit abîmé.

Les seuils d'intensité provoquant l'arrêt sont fixés à une valeur relativement élevée afin de permettre que l'actionneur puisse fonctionner alors qu'il exerce un effort important sur le siège ou un élément de siège pour son déplacement normal.

En effet, dans certaines circonstances particulières, alors qu'aucun obstacle n'est rencontré, il est nécessaire qu'un actionneur produise un effort important pour déplacer un élément mobile, notamment à cause de la conception du siège. Tel est le cas par exemple, lorsqu'un élément de siège doit franchir une rampe ascendante lors de son déplacement.

Ainsi, dans certains cas, la protection assurée par la mise en place d'un seuil d'intensité de courant peut être insuffisante pour protéger efficacement un bagage, le membre d'un passager et le siège lui-même.

L'invention a pour but de proposer un procédé de gestion du fonctionnement d'un siège qui réduise encore les risques de blessures pour un passager et augmente la durée de vie du siège.

A cet effet, l'invention a pour objet un procédé de gestion du fonctionnement d'un siège du type précité, caractérisé en ce que ladite évaluation comporte une étape de mesure de la position de l'actionneur ; et en ce que ledit critère d'évaluation de la ou chaque variable caractéristique mesurée mis en oeuvre pour ladite évaluation dépend de la position de l'actionneur.

Suivant des modes particuliers de mise en oeuvre, le procédé comporte l'une ou plusieurs des caractéristiques suivantes :

- ladite mesure appropriée est la commande de l'actionneur dans le sens inverse du sens requis par les moyens de commande ;
- au moins une variable caractéristique de l'effort produit par un actionneur est une variable caractéristique du courant électrique consommé par cet actionneur ;
- ladite variable caractéristique est l'intensité consommée par l'actionneur, et ledit critère d'évaluation prédéterminé comporte la comparaison de l'intensité consommée à un seuil prédéterminé dont la valeur dépend de la position de l'actionneur ; et
- ladite variable caractéristique est la dérivée par rapport au temps de l'intensité consommée par l'actionneur, et le critère d'évaluation prédéterminé comporte la comparaison de la dérivée par rapport au temps de l'intensité consommée à un seuil prédéterminé dont la valeur dépend de la position de l'actionneur.

L'invention a en outre pour objet un siège de véhicule comportant un actionneur pour le déplacement d'au moins un élément du siège, des moyens de mesure de la position de l'actionneur, une unité de gestion du fonctionnement du siège comportant des moyens de suivi d'au moins une variable caractéristique de l'effort produit par l'actionneur, des moyens d'évaluation de la ou chaque variable caractéristique à partir d'au moins un critère d'évaluation prédéterminé, et des moyens de mise en oeuvre d'une mesure appropriée sur le siège en fonction du résultat de ladite évaluation lors de la commande de l'actionneur. Un tel siège est connu de FR-A- 2 806 674. Selon l'invention un tel siège est caractérisé en ce que lesdits moyens d'évaluation sont adaptés pour mettre en oeuvre un critère d'évaluation prédéterminé qui dépend de la position de l'actionneur.

L'invention sera mieux comprise à la lecture de la description qui va suivre, donnée uniquement à titre d'exemple et faite en se référant aux dessins, sur lesquels :

- la figure 1 est une vue schématique d'un siège de véhicule selon l'invention représenté dans une première position ;
- la figure 2 est une vue schématique du siège de la figure 1 représenté dans une seconde position ;
- la figure 3 est un organigramme de l'algorithme mis en oeuvre dans l'unité centrale de gestion du fonctionnement du siège de la figure 1 ; et

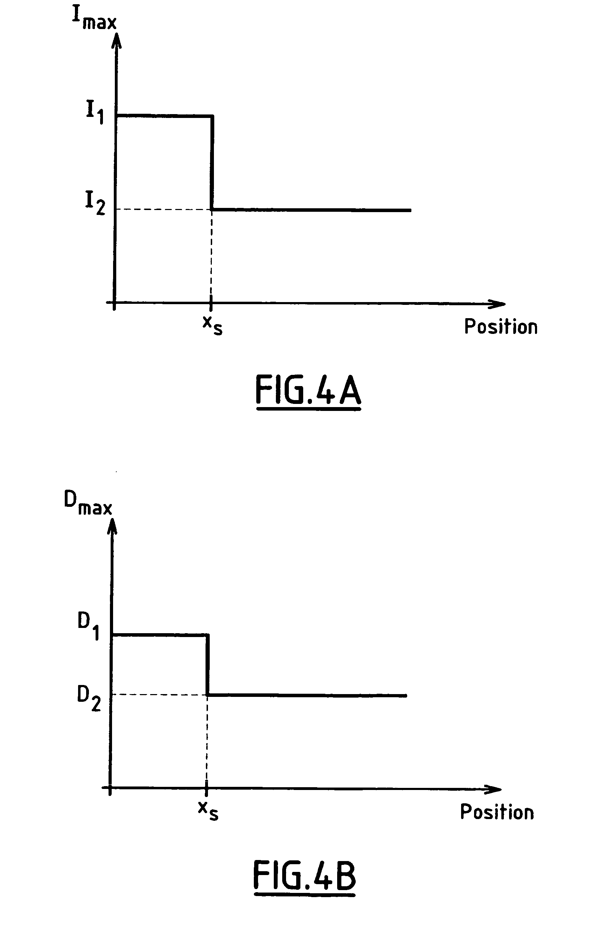

- les figures 4A et 4B sont des courbes illustrant l'évolution des seuils de courant et de la dérivée du courant en fonction de la position de l'actionneur.

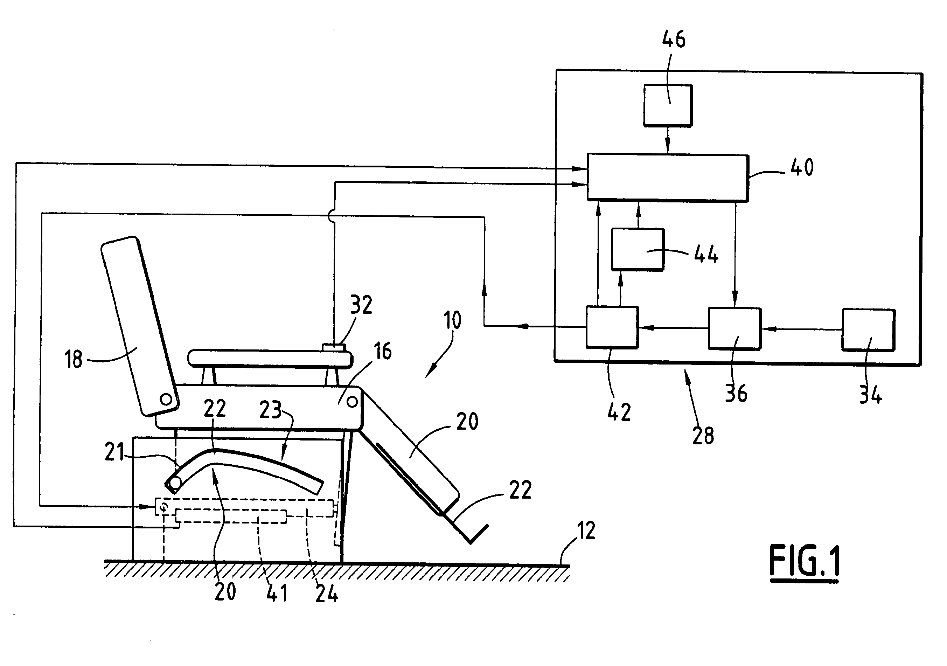

Le siège 10 représenté sur la figure 1 est un siège de passager d'un avion. Ce siège repose sur le sol 12 de l'avion.

Il comporte une structure 14 mobile par rapport au sol 12 et sur lequel repose une assise 16 sensiblement horizontale. Le siège comporte en outre un bâti 17 solidarisé au sol et par rapport auquel la structure 14 est mobile. Ce bâti est formé de deux parois parallèles verticales entre lesquelles la structure 14 est guidée.

A une extrémité de l'assise est articulé un dossier 18.

A l'autre extrémité de l'assise 16, est articulé un repose-jambes 20 déplaçable entre une position rabattue sensiblement verticale au-dessous de l'assise 16 et une position étendue sensiblement horizontale dans le prolongement de l'assise 16.

Le siège 10 comporte en outre un repose-pieds 22 monté déplaçable à coulissement par rapport au repose-jambes 20 dans le prolongement de celui-ci.

Des actionneurs électriques non représentés équipent le siège pour le déplacement du dossier, du repose-jambes et du repose-pieds.

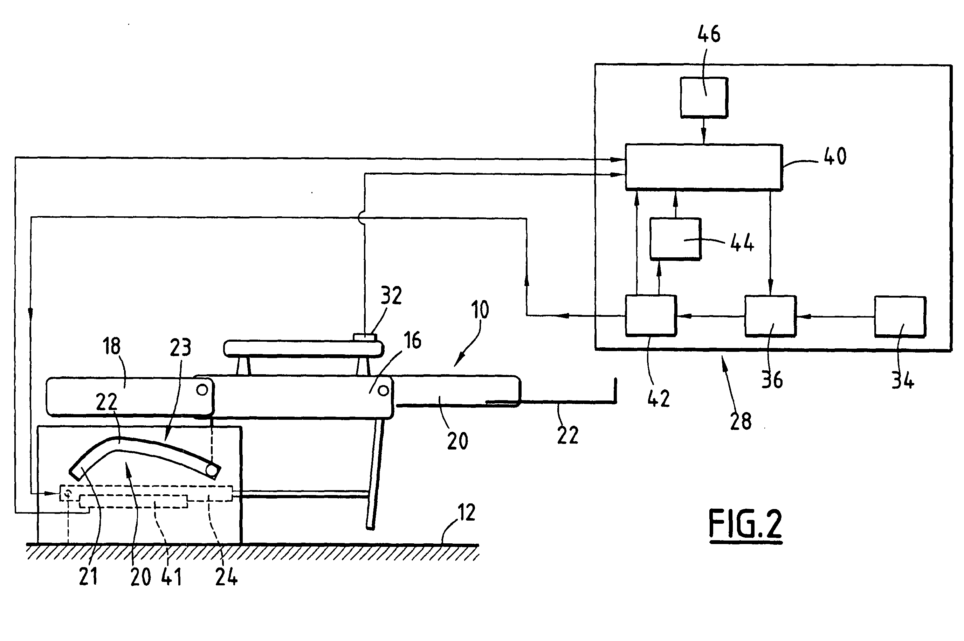

En outre, un actionneur électrique 24 est monté entre la structure mobile 14 et le bâti 17 afin d'assurer un déplacement du piétement et donc du siège entre une position reculée illustrée sur la Figure 1 et une position avancée illustrée sur la Figure 2.

La position reculée du siège, correspond à une position assise du passager, le dossier étant relevé. Au contraire, la position avancée du siège, permet un basculement du dossier, sans que le passager situé en arrière ne soit gêné. Ainsi, la position avancée du siège correspond à une position allongée du passager.

Pour le déplacement du siège, des roulettes suiveuses prévues sur chaque flanc de la structure mobile 14 du siège sont guidées dans des voies 20 ménagées dans les parois verticales du bâti 17. Ces deux voies sont identiques et sont constituées de fentes creusées dans les parois verticales.

Chaque voie 20 est d'altitude variable. Elle présente, depuis la position où se trouve la roulette suiveuse lorsque le siège est dans la position reculée du siège, une rampe ascendante 21 prolongée au-delà de son sommet 22 par une rampe descendante 23, dont l'extrémité basse correspond à la position de la roulette suiveuse du piétement lorsque le siège est dans sa position avancée extrême.

Ainsi, lors de son déplacement d'une position extrême à l'autre, la structure mobile 14 s'élève en suivant l'une des rampes jusqu'au sommet de la voie et redescend au-delà de ce sommet sous la commande de l'actionneur 24.

Pour plus de clarté, on considérera que le siège se déplace par rapport au sol dans la suite de la description bien que rigoureusement, seule la structure se déplace le bâti du siège étant fixe.

La présence de la rampe ascendante 21 permet une retenue mécanique positive du siège dans sa position reculée extrême, qui correspond à la position requise pour l'atterrissage de l'avion. Ainsi, en cas de rupture de l'actionneur 24, la rampe 21 évite que le siège ne puisse se déplacer vers l'avant lors du freinage de l'appareil, la force d'accélération s'appliquant sur le siège étant annulée par la force de retenue appliquée par la rampe ascendante 21.

L'actionneur 24 est alimenté en courant électrique depuis une unité 28 de gestion du fonctionnement du siège. Les autres actionneurs non représentés sont reliés également à l'unité de gestion 28 pour leur alimentation et leur contrôle.

En outre, le siège comporte un clavier de commande 32 permettant la commande de l'actionneur 24 afin de provoquer un déplacement de la structure mobile 14 et du siège.

Le clavier de commande 32 est relié à l'unité 28 de gestion du fonctionnement du siège.

L'unité 28 comporte une source 34 d'alimentation de l'actionneur 24. Cette dernière est formée par exemple d'un transformateur relié au réseau d'alimentation électrique générale de l'avion par des moyens de connexion adaptés.

En outre, une interface d'alimentation 36 assurant l'alimentation de l'actionneur 24 est prévue en sortie de la source d'alimentation 34. Cette interface assure la mise en forme du courant d'alimentation de l'actionneur en fonction du sens d'actionnement et de la vitesse de déplacement souhaités.

L'interface d'alimentation 36 est pilotée par une unité centrale de traitement d'informations 40. Cette unité 40 est reliée au clavier de commande 32, afin de recueillir les ordres de commande de l'utilisateur.

Pour son pilotage, l'actionneur 24 comporte un transducteur 41, tel qu'un potentiomètre permettant de fournir une information représentative de la position courante de l'actionneur, c'est-à-dire de la position réelle de l'élément du siège qu'il commande. Ce potentiomètre est relié à l'unité de traitement d'informations 40 pour fournir à celle-ci une information de position.

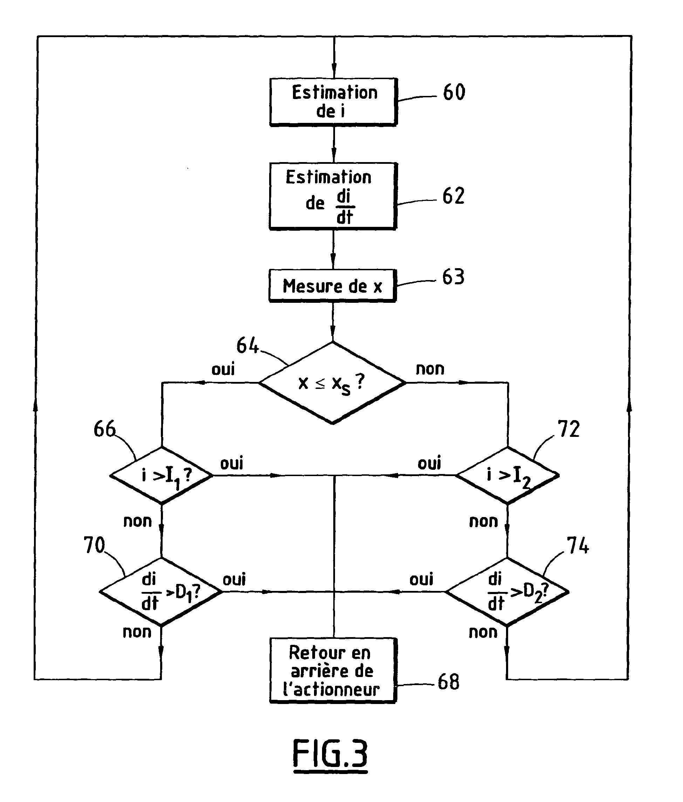

L'unité 40 met en oeuvre un programme de commande de l'actionneur de tout type adapté dans lequel sont prévues deux routines de gestion particulière qui seront exposées dans la suite de la description en regard de la figure 3.

Entre l'interface d'alimentation 36 et l'actionneur 24 sont disposés des moyens 42, destinés au suivi d'une variable caractéristique du courant électrique consommé par l'actionneur 24 lors de son fonctionnement.

Les moyens de suivi 42 sont reliés à l'unité centrale de traitement d'informations 40.

Les moyens de suivi 42 sont adaptés pour déterminer l'intensité instantanée i du courant consommé par l'actionneur 24 lors d'une phase de fonctionnement de celui-ci.

L'unité centrale de gestion 28 comporte en outre des moyens de dérivation 44 dont l'entrée est reliée aux moyens de suivi 42 et dont la sortie est reliée à l'unité centrale de traitement d'informations 40. Ces moyens de dérivation sont adaptés pour fournir en sortie, la dérivée par rapport au temps, notée $\dfrac{di}{dt}$, de l'intensité instantanée i.

Ainsi, l'unité centrale de traitement d'informations 40 reçoit en continu à la fois la valeur i de l'intensité du courant consommé par l'actionneur 24 et la valeur $\dfrac{di}{dt}$ de la dérivée par rapport au temps de l'intensité du courant consommé.

En outre, des moyens de mémorisation 46 sont reliés à l'unité centrale de traitement d'informations 40. Dans ces moyens de mémorisation sont stockés des couples de valeurs de seuil prédéterminées utilisées pour stopper l'actionneur, en cas de dépassement de ces valeurs par certaines valeurs mesurées sur l'actionneur. Ces couples sont notés respectivement $(I_1, D_1)$ et $(I_2$ et $D_2)$ pour la commande de l'actionneur 24 dans le sens d'avance de la position reculée à la position avancée. Pour la commande de l'actionneur dans le sens opposé d'autres couples de valeurs $(I_1', D_1')$ et $(I_2', D_2')$ sont stockés.

En outre, une valeur de commutation $x_s$ est mémorisée. Cette valeur correspond à la valeur fournie par le transducteur 41 lorsque la roulette suiveuse est au sommet 21 de la voie.

Dans la suite de la description, seul le cas du déplacement de l'actionneur 24 dans le sens d'avance faisant passer le siège de sa position reculée extrême à sa position avancée extrême sera décrit en détail.

Les couples $(I_1, D_1)$ et $(I_2, D_2)$ sont des seuils d'arrêt de l'actionneur 24 auxquels sont comparées constamment les valeurs de l'intensité i et de sa dérivée par rapport au temps $\dfrac{di}{dt}$. Les seuils $(I_1, D_1)$ sont utilisés lorsque la roulette suiveuse est en arrière du sommet 22 de la voie, alors que les seuils $(I_2, D_2)$ sont utilisés lorsque la roulette suiveuse est en avant du sommet 22.

Pour le fonctionnement du siège, l'unité centrale de traitement d'informations 40 met en oeuvre un programme connu en soi adapté afin de commander l'interface d'alimentation 36 pour que celle-ci assure l'alimentation de l'actionneur 24 dans un sens ou dans l'autre par inversion du sens de courant, en fonction des informations reçues depuis le clavier 32.

De plus, pendant le fonctionnement de l'actionneur 24 suivant le premier sens d'avance visant à déplacer le siège de sa position reculée vers sa position avancée, l'unité centrale de traitement d'informations 40 met en oeuvre en continu une routine dont l'algorithme est illustré sur la figure 3. Les étapes successives de cet algorithme sont mises en oeuvre en boucle. Un algorithme analogue avec les couples de valeurs de seuil $(I_1', D_1')$ et $(I_2', D_2')$ est mis en oeuvre pour le déplacement du siège de sa position avancée vers sa position reculée.

L'algorithme comporte d'abord une étape 60 d'estimation de l'intensité i du courant consommé par l'actionneur 24. L'intensité i est fournie par les moyens de suivi 42.

A l'étape suivante 62, l'unité centrale de traitement d'informations 40 recueille une estimation de la dérivée par rapport au temps $\dfrac{di}{dt}$ de l'intensité du courant consommé. Cette estimation est fournie par les moyens de dérivation 44.

A l'étape 63, la position notée x de l'actionneur 24 est mesurée à partir du potentiomètre 41.

Lors de l'étape suivante notée 64, l'unité centrale de traitement d'informations 40 détermine la position de l'actionneur 24 par rapport à la valeur de commutation $x_s$ correspondant à la position de l'actionneur lorsque la roulette suiveuse se trouve au sommet 22 de la voie 20.

Suivant que l'actionneur 24 se trouve en avant ou en arrière de la position correspondant à la valeur $x_s$, les étapes de l'une ou l'autre des branches de l'organigramme sont mises en oeuvre.

Plus précisément, si la roulette suiveuse est en arrière du sommet, c'est-à-dire que la valeur x de position de l'actionneur est inférieure à la valeur $x_s$, l'intensité i est d'abord comparée à l'étape 66 à une première valeur de seuil prédéterminé $I_1$ mémorisée dans les moyens 46.

Cette première valeur de seuil $I_1$ est fixée expérimentalement et correspond à une valeur minimale de courant consommé par l'actionneur 24 lorsque le siège heurte un obstacle, alors que le siège gravit la rampe ascendante 21. La première valeur du seuil $I_1$ est fixée à un niveau relativement haut.

Si la valeur de l'intensité i du courant fournie par les moyens de suivi 42 est supérieure à la première valeur du seuil $I_1$, un retour en arrière de l'actionneur sur une faible course est commandé à l'étape 68 par l'unité centrale de traitement d'informations 40 pilotant l'interface 36 en ce sens. Le retour en arrière est effectué par exemple pendant une brève période de temps prédéterminée au cours de laquelle le moteur de l'actionneur est mis en rotation en sens inverse.

En variante, le retour en arrière est effectué sur une brève course prédéterminée de l'actionneur.

Si, au contraire, l'intensité i est inférieure à la première valeur de seuil $I_1$, l'étape de test 70 est alors mise en oeuvre. Lors de cette étape, la valeur $\dfrac{di}{dt}$ de la dérivée par rapport au temps de l'intensité i du courant consommé par l'actionneur 24 est comparée une première valeur de seuil $D_1$, mémorisée dans les moyens de mémorisation 46.

La première valeur de seuil $D_1$ correspond à la valeur minimale de la dérivée par rapport au temps de l'intensité du courant consommé par l'actionneur 24 lorsque le siège 20 rencontre un obstacle alors qu'il gravit la rampe 21. La première valeur du seuil $D_1$ est fixée à un niveau relativement haut.

Si la valeur estimée de la dérivée par rapport au temps $\dfrac{di}{dt}$ de l'intensité i du courant consommé est supérieure à la première valeur de seuil $D_1$, un bref retour en arrière de l'actionneur 24 est commandé par l'étape 68. Au contraire, si cette condition n'est pas remplie, l'actionneur n'est pas arrêté et l'étape 60 est à nouveau mise en oeuvre.

Si la roulette suiveuse est en avant du sommet 22, c'est-à-dire que la valeur x fournie par le potentiomètre 41 est supérieure à $x_s$, lors du test effectué à l'étape 64, le courant estimé i est comparé à l'étape 72 à une seconde valeur de seuil $I_2$ mémorisée dans les moyens de mémorisation 46.

Cette seconde valeur de seuil $I_2$ est inférieure à la première valeur de seuil $I_1$ correspondante. Elle est fixée expérimentalement et correspond à la valeur minimale de l'intensité du courant consommé par l'actionneur 24 lorsque le siège rencontre un obstacle entravant le libre cheminement du siège alors que le siège descend la rampe 23.

A l'étape 72, si la valeur i estimée est supérieure à la seconde valeur de seuil $I_2$, un bref retour en arrière de l'actionneur 24 est commandé à l'étape 68. En revanche, si cette condition n'est pas satisfaite, la valeur $\dfrac{di}{dt}$ de la dérivée par rapport au temps de l'intensité du courant consommé par l'actionneur 24, est comparée à l'étape 74 à une seconde valeur de seuil prédéterminé $D_2$.

Cette seconde valeur de seuil prédéterminé $D_2$ est déterminée expérimentalement. Elle correspond à la valeur minimale de la dérivée par rapport au temps de l'intensité du courant consommé par l'actionneur 24 lorsque le siège descend la rampe 23 et rencontre un obstacle. Cette seconde valeur de seuil $D_2$ est inférieure à la première valeur de seuil $D_1$ correspondante.

Si la valeur $\dfrac{di}{dt}$ est supérieure à la seconde valeur de seuil $D_2$, un bref retour en arrière de l'actionneur 24 est commandé à l'étape 68. Si tel n'est pas le cas, l'étape 60 est à nouveau mise en oeuvre.

On comprend que suivant la position de l'actionneur 24, la valeur de l'intensité i du courant consommé, ainsi que sa dérivée première par rapport au temps $\dfrac{di}{dt}$ sont comparées chacune à l'un ou l'autre de deux seuils prédéterminés.

Si l'intensité où sa dérivée première vient à dépasser l'une de ces valeurs de seuil, un bref retour en arrière de l'actionneur est commandé, évitant que le siège ne continue son déplacement ce qui pourrait blesser le passager, détériorer un bagage, ou encore endommager le siège lui-même.

Toutefois, dans la mesure où les efforts devant être appliqués par l'actionneur 24 suivant le sens d'inclinaison des rampes 21 et 23 en l'absence même d'obstacle sont différents, les valeurs des seuils prédéterminés sont différentes.

En effet, lorsque le siège gravit la rampe 21, le poids du siège s'oppose au déplacement de celui-ci, de sorte que le courant consommé par l'actionneur est généralement élevé, en l'absence même d'obstacle. Ainsi, le seuil $I_1$ est fixé à une valeur élevée, sans quoi le déplacement du siège serait impossible.

Au contraire, lorsque le siège se déplace suivant la rampe descendante 23, l'intensité du courant consommé par l'actionneur est très faible en l'absence d'obstacle puisque le siège est entraîné par son propre poids et éventuellement le poids du passager. Ainsi, une valeur de seuil $I_2$ très faible peut être utilisée.

Dans les deux cas, une très grande sécurité pour le siège et le passager est garantie, puisque le déplacement du siège est stoppé dès que celui-ci heurte un obstacle, sans qu'une force importante ne doive être appliquée sur l'obstacle.

L'établissement du seuil $I_1$ à une valeur élevée n'empêche pas la mise en oeuvre d'un seuil de sécurité très bas lors du déplacement du siège vers sa position avancée, augmentant ainsi considérablement la sécurité lors du fonctionnement du siège.

Ainsi, l'utilisation de seuils distincts suivant la position de l'actionneur permet d'affiner le procédé de gestion du fonctionnement du siège, évitant les arrêts intempestifs de l'actionneur, comme cela peut être constaté lorsqu'un unique seuil est mis en oeuvre.

De même, les seuils utilisés pour la comparaison de la dérivée par rapport au temps de l'intensité du courant consommé par l'actionneur, peuvent également être fixés de manière différenciée suivant la position de l'actionneur.

On conçoit qu'un tel procédé de surveillance peut également être mis en oeuvre pour des actionneurs commandant le déplacement d'autres parties du siège, et notamment pour un actionneur commandant le dossier articulé du siège.

Dans le mode de réalisation décrit ici, l'intensité et sa dérivée première par rapport au temps sont comparées à des valeurs de seuil distinctes en fonction de la position de l'actionneur. Toutefois, de manière générale, tout type de variable caractéristique de l'effort produit par les actionneurs lors de l'utilisation peut être utilisé. Ainsi, en variante, les variables caractéristiques du courant consommé décrites précédemment, qui sont représentatives de l'effort appliqué par l'actionneur, sont remplacées par le couple appliqué par un actionneur ou par la puissance délivrée par celui-ci. En particulier, les moyens de suivi décrits sont alors remplacés par des capteurs de couple, les comparaisons opérées étant alors mises en oeuvre sur les couples mesurés.

En outre, suivant une autre variante, lorsque l'un des seuils prédéterminés est franchi, plutôt que de commander l'actionneur en sens inverse comme cela est décrit ici, l'actionneur est seulement stoppé.

Dans l'exemple décrit précédemment, la course de déplacement de l'actionneur est décomposée en deux zones auxquelles sont affectés deux seuils distincts pour la comparaison de l'intensité et de sa dérivée première.

En variante, la course de l'actionneur est séparée en plus de deux zones et autant de valeurs de seuils prédéterminées que de zones sont mises en oeuvres.

Suivant encore une autre variante, la valeur de seuil à laquelle est comparée l'intensité ou sa dérivée première est définie comme une fonction de la position de l'actionneur. Cette fonction est par exemple une fonction affine, ou une fonction affine par morceaux.

## Revendications

1. Procédé de gestion du fonctionnement d'un siège (10) équipé d'un actionneur (24) comportant des moyens (42, 44) de suivi d'au moins une variable caractéristique de l'effort produit par l'actionneur (24), des moyens (41) de mesure de la position de l'actionneur et des moyens (36) de commande de l'actionneur, le procédé comportant des étapes consistant en :

   - une mesure de la ou chaque variable caractéristique ;
   - une évaluation de la ou chaque variable caractéristique à partir d'un critère d'évaluation prédéterminé ; et
   - la mise en oeuvre d'une mesure appropriée sur le siège en fonction du résultat de ladite évaluation lors de la commande de l'actionneur ;

**caractérisé en ce que** ladite évaluation comporte une étape de mesure de la position de l'actionneur ; et **en ce que** ledit critère d'évaluation de la ou chaque variable caractéristique mesurée mis en oeuvre pour ladite évaluation dépend de la position de l'actionneur.

2. Procédé de gestion du fonctionnement d'un siège selon la revendication 1, **caractérisé en ce que** ladite mesure appropriée est la commande de l'actionneur (24) dans le sens inverse du sens requis par les moyens de commande (36).

3. Procédé de gestion du fonctionnement d'un siège selon la revendication 1 ou 2, **caractérisé en ce qu'**au moins une variable caractéristique de l'effort produit par un actionneur est une variable caractéristique du courant électrique consommé par cet actionneur.

4. Procédé de gestion du fonctionnement d'un siège selon la revendication 3, **caractérisé en ce que** ladite variable caractéristique est l'intensité consommée par l'actionneur, et **en ce que** ledit critère d'évaluation prédéterminé comporte la comparaison de l'intensité consommée à un seuil prédéterminé dont la valeur dépend de la position de l'actionneur.

5. Procédé de gestion du fonctionnement d'un siège selon la revendication 3, **caractérisé en ce que** ladite variable caractéristique est la dérivée par rapport au temps de l'intensité consommée par l'actionneur, et **en ce que** le critère d'évaluation prédéterminé comporte la comparaison de la dérivée par rapport au temps de l'intensité consommée à un seuil prédéterminé dont la valeur dépend de la position de l'actionneur.

6. Siège de véhicule (10), du type comportant un actionneur (24) pour le déplacement d'au moins un élément du siège, des moyens (41) de mesure de la position de l'actionneur (24), une unité (28) de gestion du fonctionnement du siège comportant des moyens (42, 44) de suivi d'au moins une variable caractéristique de l'effort produit par l'actionneur (24), des moyens (40) d'évaluation de la ou chaque variable caractéristique à partir d'au moins un critère d'évaluation prédéterminé, et des moyens de mise en oeuvre d'une mesure appropriée sur le siège en fonction du résultat de ladite évaluation lors de la commande de l'actionneur, **caractérisé en ce que** lesdits moyens d'évaluation (40) sont adaptés pour mettre en oeuvre un critère d'évaluation prédéterminé qui dépend de la position de l'actionneur.

## Claims

1. Method of managing the operation of a seat (10) equipped with an actuator (24), comprising means (42, 44) for monitoring at least one variable which is characteristic of the force produced by the actuator (24), means (41) for measuring the position of the actuator and means (36) for controlling the actuator, the method comprising steps consisting of:

   - measurement of the or each characteristic variable;
   - evaluation of the or each characteristic variable on the basis of a predetermined evaluation criterion; and
   - performing an appropriate action on the seat as a function of the result of said evaluation in the course of controlling the actuator;

   **characterised in that** said evaluation comprises a step of measurement of the position of the actuator; and **in that** said evaluation criterion of the or each measured characteristic variable used for said evaluation depends on the position of the actuator.

2. Method of managing the operation of a seat, according to claim 1, **characterised in that** said appropriate action is controlling the actuator (24) in the direction opposite to the direction required by the control means (36).

3. Method of managing the operation of a seat, according to claim 1 or 2, **characterised in that** at least one variable which is characteristic of the force produced by an actuator is a variable which is characteristic of the electric current taken by that actuator.

4. Method of managing the operation of a seat, according to claim 3, **characterised in that** said characteristic variable is the intensity of the current taken by the actuator, and **in that** said predetermined evaluation criterion comprises comparison of the intensity of the taken current with a predetermined threshold, the value of which depends on the position of the actuator.

5. Method of managing the operation of a seat, according to claim 3, **characterised in that** said characteristic variable is the derivative, with respect to time, of the intensity of the current taken by the actuator, and **in that** the predetermined evaluation criterion comprises comparison of the derivative, with respect to time, of the intensity of the taken current with a predetermined threshold, the value of which depends on the position of the actuator.

6. Vehicle seat (10), of the type comprising an actuator (24) for displacement of at least one element of the seat, means (41) for measuring the position of the actuator (24), a seat operation management unit (28) comprising means (42, 44) for monitoring at least one variable which is characteristic of the force produced by the actuator (24), means (40) for evaluation of the or each characteristic variable on the basis of at least one predetermined evaluation criterion, and means for performing an appropriate action on the seat as a function of the result of said evaluation in the course of controlling the actuator, **characterised in that** said evaluation means (40) are arranged to use a predetermined evaluation criterion which depends on the position of the actuator.

## Patentansprüche

1. Verfahren zum Steuern des Betriebs eines mit einem Stellelement (24) ausgerüsteten Sitzes (10), mit Mitteln (42, 44) zum Verfolgen wenigstens einer charakteristischen Variable der durch das Stellelement (24) erzeugten Kraft, Mitteln (41) zum Messen der Position des Stellelements und Mitteln (36) zum Steuern des Stellelements, wobei das Verfahren die Schritte umfasst, die darin bestehen:

   - die oder jede charakteristische Variable zu messen;
   - die oder jede charakteristische Variable anhand eines vorgegebenen Bewertungskriteriums zu bewerten; und
   - eine geeignete Maßnahme an dem Sitz in Abhängigkeit vom Ergebnis der Bewertung bei der Steuerung des Stellelements auszuführen;

   **dadurch gekennzeichnet, dass** die Bewertung einen Schritt des Messens der Position des Stellelements umfasst; und dass das Bewertungskriterium der oder jeder gemessenen charakteristischen Variable, die für die Bewertung verwendet wird, von der Position des Stellelements abhängt.

2. Verfahren zum Steuern des Betriebs eines Sitzes nach Anspruch 1, **dadurch gekennzeichnet, dass** die geeignete Maßnahme die Steuerung des Stellelements (24) in der Richtung, die zu der von den Steuermitteln (36) geforderten Richtung entgegengesetzt ist, ist.

3. Verfahren zum Steuern des Betriebs eines Sitzes nach Anspruch 1 oder 2, **dadurch gekennzeichnet, dass** wenigstens eine charakteristische Variable der von einem Stellelement erzeugten Kraft eine charakteristische Variable des von diesem Stellelement verbrauchten elektrischen Stroms ist.

4. Verfahren zum Steuern des Betriebs eines Sitzes nach Anspruch 3, **dadurch gekennzeichnet, dass** die charakteristische Variable die von dem Stellelement verbrauchte Intensität ist und dass das vorgegebene Bewertungskriterium den Vergleich der verbrauchten Intensität mit einer vorgegebenen Schwelle, deren Wert von der Position des Stellelements abhängt, umfasst.

5. Verfahren zum Steuern des Betriebs eines Sitzes nach Anspruch 3, **dadurch gekennzeichnet, dass** die charakteristische Variable die zeitliche Ableitung der von dem Stellelement verbrauchten Intensität ist und dass das vorgegebene Bewertungskriterium den Vergleich der zeitlichen Ableitung der verbrauchten Intensität mit einer vorgegebenen Schwelle, deren Wert von der Position des Stellelements abhängt, umfasst.

6. Fahrzeugsitz (10) des Typs, der ein Stellelement (24) für die Verlagerung wenigstens eines Elements des Sitzes, Mittel (41) zum Messen der Position des Stellelements (24) und eine Einheit (28) zum Steuern des Betriebs des Sitzes mit Mitteln (42, 44) zum Verfolgen wenigstens einer charakteristischen Variable des durch das Stellelement (24) erzeugten Kraft, Mitteln (40) zum Bewerten der oder jeder charakteristischen Variable anhand wenigstens eines vorgegebenen Bewertungskriteriums und Mitteln zum Ausführen einer geeigneten Maßnahme an dem Sitz in Abhängigkeit vom Ergebnis der Bewertung bei der Steuerung des Stellelements umfasst, **dadurch gekennzeichnet, dass** die Bewertungsmittel (40) so beschaffen sind, dass sie ein vorgegebenes Bewertungskriterium verwenden, das von der Position des Stellelements abhängt.

FIG.1

FIG.2

**FIG.3**

FIG.4A

FIG.4B